# EUROPÄISCHE PATENTSCHRIFT

(11) **EP 1 286 072 B1**
(45) Veröffentlichungstag und Bekanntmachung des Hinweises auf die Patenterteilung: **27.04.2005**
(21) Anmeldenummer: 02017437.1
(22) Anmeldetag: 03.08.2002
(51) Int. Cl.: F16D 3/205

(54) **Tripodegelenk**
Tripod joint
Joint tripode

(30) Priorität: 23.08.2001 DE 10141428; 08.06.2002 DE 10225468
(43) Veröffentlichungstag der Anmeldung: 26.02.2003
(73) Patentinhaber: DaimlerChrysler AG, 70567 Stuttgart (DE)
(72) Erfinder: Henkel, Jürgen, 71394 Kernen (DE); Münich, Peter, 70736 Fellbach (DE); Schröder, Rolf, 70619 Stuttgart (DE); Wörner, Günter, 71394 Kernen (DE)

(56) Entgegenhaltungen:
- WO-A-02/44573
- PATENT ABSTRACTS OF JAPAN vol. 012, no. 260 (M-720), 21. Juli 1988 (1988-07-21) & JP 63 043027 A (HONDA MOTOR CO LTD), 24. Februar 1988 (1988-02-24)
- PATENT ABSTRACTS OF JAPAN vol. 1999, no. 08, 30. Juni 1999 (1999-06-30) & JP 11 082532 A (HONDA MOTOR CO LTD), 26. März 1999 (1999-03-26)

## Beschreibung

Die Erfindung betrifft ein Tripodegelenk.

Tripodegelenke finden beispielsweise Einsatz als Seitenwellen von Kraftfahrzeugen. Hierbei dienen die Tripodegelenke zur Übertragung von Antriebsmomenten zwischen zwei Antriebselementen eines Antriebsstranges. Mittels der Tripodegelenke ist der Ausgleich einer relativen Verschiebung sowie einer relativen Verschwenkung der Antriebselemente ermöglicht. Für den Einsatz bei Seitenwellen eines Kraftfahrzeuges sind derartige Relativbewegungen durch Einfederungen der Fahrzeugräder bedingt.

Aus der US 4 619 628 ist ein Tripodegelenk mit einem Gelenkaußenteil und einem in diesem aufgenommenen Gelenkinnenteil bekannt. Das Gelenkinnenteil verfügt über einen Tripodestern mit Kugelkörper aufweisenden Zapfen. Die Kugelkörper finden verschwenkbar in einer Ausnehmung eines Druckstückes Aufnahme. Das Druckstück ist über Wälzlager beweglich gegenüber Gegenflächen des Gelenkaußenteiles gelagert. Die Wälzkörper sind in Käfigen mit gegenüber der Käfigen ortsfesten Längsachsen angeordnet. Die Käfige sind jeweils längsverschieblich gegenüber den Druckstuck gelagert.

Bei dieser bekannten Ausführungsform führt eine Verschwenkung des Gelenkinnenteiles zu einer Bewegung der Zapfen und des Druckstückes auf einer Kreisbahn. Hierdurch verändert sich der Abstand des Druckstückes von der Längsachse des Gelenkaußenteiles. Die Wälzkörper sind im Gelenkaußenteil in geradlinigen Führungsnuten geführt. Die unterschiedlichen Randbedingung der Wälzkörper am Druckstück einerseits (Kreisbahn) und an dem Gelenkaußenteil andererseits (geradlinige Bewegung) müssen durch eine Gleitbewegung der Wälzkörper gegenüber dem Druckstück in Längsrichtung der Wälzkörper ausgeglichen werden, wodurch erhöhte Gleitanteile bedingt sind. Hierdurch kann es bei räumlichen Bewegungen des Tripodegelenkes zu mechanischen Beeinträchtigungen der Übertragungsfunktion kommen, was schlimmstenfalls zur Schwingungs- und/oder Geräuschanregung des Antriebsstranges und zu hieraus resultierenden Komfortbeeinträchtigungen führen kann. Weiterhin sind die Wälzkörper mit zugeordneten Käfigen in Nuten des Gelenkaußenteiles geführt, welche für die Herstellung des Gelenkaußenteiles einen erhöhten Fertigungsaufwand erfordern.

Aus der Druckschrift DE 38 16 646 ist ein Tripodegelenk ohne Führungsnuten im Gelenkaußenteil bekannt. In diesem Gelenk ist allerdings der Wälzkontakt mit um den Kugelkörper umlaufenden Wälzkörpern ausgebildet, wodurch ein erhöhter Bauaufwand bedingt ist. Diese Bauart hat des weiteren den Nachteil, daß in Umfangsrichtung gelenkkinematisch Spiel erforderlich ist infolge der umlaufenden Wälzkörper. Dieses Spiel kann sich bei Lastwechseln als Lastwechselschlag bemerkbar machen. Das Tripodegelenk ist darüber hinaus durch die Vielzahl und Komplexität der Bauelemente teuer.

Der Erfindung liegt die Aufgabe zugrunde, ein hinsichtlich des Bauteile-, Fertigungsaufwandes und/oder des mechanischen Übertragungsverhaltens verbessertes Tripodegelenk vorzuschlagen.

Ein Vorschlag zur Lösung der der Erfindung zugrundeliegenden Aufgabe ist gekennzeichnet durch die Merkmale des Patentanspruchs 1.

Die im wesentlichen zylinderförmigen Wälzkörper sind in Käfigen mit gegenüber den Käfigen ortsfesten Längsachsen angeordnet. Hierdurch können die Wälzkörper optimal geführt werden, insbesondere bilden die Wälzkörper mit den Käfigen eine Bauoder Montageeinheit. Weiterhin können hierdurch hinsichtlich Bauteilvielzahl- und Komplexität sowie Bauraum nachteilige Wälzkörperumlaufanordnungen vermieden werden.

Die Käfige sind längsverschieblich gegenüber dem Druckstück gelagert. Hierdurch ist die Längsverschieblichkeit der beiden Gelenkteile gewährleistet.

Weiterhin ist in radialer Richtung die Bewegung der Käfige gegenüber dem Druckstück über das Druckstückumgreifende bzw. einschließende Schultern begrenzt. Durch die Schultern ist somit ein radialer Bereich vorgesehen, in welchem sich die Wälzkörper mit den Käfigen gegenüber dem Zapfen bewegen können. Hierbei bilden die Schultern Anschläge für den Käfig bzw. die Wälzkörper. Die radiale Erstreckung der Gegenflächen ist zumindest in Teilbereichen größer als die Längserstreckung der Wälzkörper oder die radiale Erstreckung von den die Wälzlager führenden Käfigen, so dass gekrümmte Bahnen der Käfige mit den Wälzkörpern ermöglicht sind. Bei einer Verschwenkung des zugeordneten Zapfens führt somit der Käfig mit den Wälzkörpern keine translatorische Bewegung auf der Gegenfläche aus, sondern die Käfige kommen zur Anlage an die Schultern, so dass die Käfige mit dem durch den Abstand der Schultern von der Schwenkachse vorgegebenen Radius auf einer gekrümmten Bahn verschwenkt werden.

Eine Führung des Käfigs oder der Wälzkörper durch das Gelenkaußenteil auf einer festen oder translatorischen Bahn erfolgt im vorliegenden Fall nicht. Dies hat verringerte Führungskräfte oder eine Vermeidung derselben zu Folge, wodurch eine Verbesserung des Übertragungsverhaltens durch Wegfall unerwünschter Störkräfte bedingt ist. Des weiteren kann eine Verringerung des auftretenden Verschleißes im Bereich von ansonsten notwendigen Führungsflächen erzielt werden. Darüber hinaus erfolgt infolge eines durch den Abstand der Schultern vorgegebenes Spiel die wiederholte Bewegung der Wälzkörper nicht auf identischen Bahnen, sondern es erfolgt je nach Verschiebung und Verschwenkung des Tripodegelenkes eine Bewegung auf unterschiedlichen Bahnen. Hierdurch bedingt wird im Betrieb des Tripodegelenkes eine größere Kontaktfläche zur Abstützung der Wälzkörper genutzt, wodurch eine geringere Materialbeanspruchung im Bereich der Lauf- bzw. Gegenflächen des Gelenkaußenteiles bedingt sind. Besonders vorteilhaft ist bei der erfindungsgemäßen Ausgestaltung, daß kein Spiel der Bauteile in Umfangsrichtung erforderlich ist. Die Bauteile können sogar mit leichter Überdeckung verbaut werden. Dadurch ergibt sich ein weiter verbessertes mechanisches Übertragungsverhalten.

Vorzugsweise ist die Bewegung der Käfige gegenüber dem Druckstück in radialer Richtung über das Druckstück umgreifende bzw. einschließende Schultern spielfrei geführt. Entsprechend dieser Ausbildung kann (im Rahmen der Elastizität der Schultern) eine exakte Führung der Käfige gewährleistet werden, ohne dass aufwendige Führungsnuten in die Gegenflächen eingebracht werden müssen.

Nach der Erfindung verfügt das Gelenkaußenteil über Aufnahmeräume für die Zapfen, wobei die Aufnahmeräume im Querschnitt über eine im wesentlichen U-förmige Kontur verfügen und die parallelen Seitenschenkel der Kontur radial nach innen geradlinig ausgebildet sind und zumindest teilweise die Gegenflächen bilden.

Derartig ausgebildete Aufnahmeräume lassen sich auf besonders einfache Weise herstellen, da keine Nuten mit den Nutgrund bildenden Gegenflächen hoher Oberflächenqualität hergestellt werden müssen. Vielmehr kann das Gelenkaußenteil beispielsweise in einem Schmiedeprozeß hergestellt werden. Das Gelenkaußenteil kann im einfachsten Fall ohne spanende Bearbeitung vor oder nach einer Warmbehandlung (Härten) fertiggeschmiedet werden. Die Laufbahnen können alternativ oder zusätzlich durch axiales und/oder radiales Einführen eines Werkzeuges in das Gelenkaußenteil hergestellt werden. Ebenso können die Druckstücke und deren teilkugelförmige Ausnehmung schmiedetechnisch fertigbearbeitet werden. Bei Bedarf kann zur Verbesserung der Rolloberfläche der Druckstücke ein Kalibrier- oder Planschleifprozeß als Endbearbeitung nachgeschaltet sein.

Vorzugsweise sind jedem Zapfen auf gegenüberliegenden Seiten zwei Käfige zugeordnet, welche miteinander verbunden sind. Hierbei können die Käfige einstückig ausgebildet sein oder über mechanische Verbindungsmittel miteinander verbunden werden. Die mechanischen Verbindungsmittel können zur Vereinfachung der Montage elastisch ausgebildet sein. In Folge der Verbindung sind die Bewegungen der beiden Käfige miteinander gekoppelt, so dass sich ein verbessertes Übertragungsverhalten des Tripodegelenkes ergibt. Weiterhin bilden Käfige, Wälzkörper, Druckstück und Zapfen eine gut handhabbare Montageeinheit.

Nach einer Weiterbildung der Erfindung ist mindestens ein Käfig in Wälzrichtung der Wälzkörper über ein Verbindungselement mit dem Druckstück gekoppelt. Bei dem Verbindungselement kann es sich um ein Zentrier-/ oder Federelement handeln, welches die Bewegung des Käfigs begrenzt oder beispielsweise eine Rückstellkraft in eine Mittenstellung des Käfigs gegenüber dem Druckstück gewährleistet.

Vorteilhafte Ausgestaltungen ergeben sich aus den Unteransprüchen und der Beschreibung.

Bevorzugte Ausführungsbeispiele des erfindungsgemäßen Tripodegelenkes werden nachfolgend anhand der Zeichnung näher erläutert. In der Zeichnung zeigen:

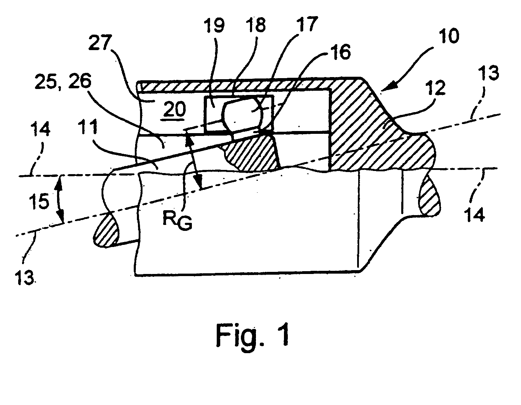

- Fig. 1: ein erfindungsgemäßes Tripodegelenk im Längsschnitt,
- Fig. 2: ein erfindungsgemäßes Tripodegelenk im Querschnitt,
- Fig. 3: einen erfindungsgemäßen Gelenkzapfen mit Druckkörper, Käfig, Wälzkörpern und Zentrierelementen im Schnitt A-A gemäß Fig. 2,
- Fig. 4: einen erfindungsgemäßen Gelenkzapfen mit Druckstück, Laufkäfig, Wälzkörpern und Zentrierelementen im Schnitt A-A gemäß Fig. 2,
- Fig. 5: einen erfindungsgemäßen Gelenkzapfen mit Druckstück, Laufkäfig und Wälzkörpern im Schnitt A-A gemäß Fig. 2,
- Fig. 6: einen erfindungsgemäßen Gelenkzapfen mit Druckstück, Laufkäfig und Wälzkörpern im Schnitt A-A gemäß Fig. 2 und
- Fig. 7: einen erfindungsgemäßen Gelenkzapfen mit Druckstück, Laufkäfig und Wälzkörpern in einem Schnitt quer zur Längsachse 13-13.

Ein Tripodegelenk 10 verfügt über ein Gelenkinnenteil 11 sowie ein dieses aufnehmendes Gelenkaußenteil 12. Das Gelenkinnenteil 11 sowie das Gelenkaußenteil 12 sind jeweils zumindest drehfest mit einem Antriebselement eines Antriebsstrang eines Kraftfahrzeuges verbunden, beispielsweise mit einer Antriebswelle und einem Fahrzeugrad. Das Tripodegelenk 10 dient einer Übertragung eines Antriebsmomentes zwischen dem Gelenkinnenteil 11 und dem Gelenkaußenteil 12 bei Gewährleistung einer relativen Verschiebung entlang der Längsachse 13-13 des Gelenkinnenteils 11 bzw. der Längsachse 14-14 des Gelenkaußenteils 12, einer relativen Verschenkung des Gelenkinnenteils 11 gegenüber dem Gelenkaußenteil 12, welche mit einer Veränderung des Winkels 15 zwischen den Längsachsen 13-13 und 14-14 einhergeht, sowie einer räumlichen Bewegung, welche sich aus einer Überlagerung der vorgenannten Bewegungsformen ergibt.

Das Gelenkinnenteil 11 verfügt am innenliegenden Ende über drei ein- oder mehrstückig mit diesem ausgebildete, radial orientierte und jeweils unter 120° in Umfangsrichtung verteilte Zapfen 16, welche einen Tripodestern bilden. Die Zapfen 16 weisen jeweils einen teilkugelförmigen Kugelkörper 17 auf. Der Kugelkörper 17 liegt zur Übertragung von Kräften in beide Umfangsrichtungen jeweils im Bereich der kugelförmigen Mantelfläche an einer korrespondierend ausgebildeten Ausnehmung 18 eines Druckstückes 19 an. Auf der gegenüberliegenden, einer ebenen Gegenfläche 20 des Gelenkaußenteiles 12 zugewandten Seite des Druckstückes 19 ist dieses mit einer Lauffläche 21 eben ausgebildet.

Die Lauffläche 21 und die Gegenfläche 20 sind parallel zueinander orientiert. Zwischen diesen sind zylinderförmige Wälzkörper 23, insbesondere Rollen oder Nadeln, unter Ausbildung eines Linienkontaktes aufgenommen. Mehrere Wälzkörper sind in einem Käfig 24 derart geführt, daß sich die relative Lage der Längsachsen der Wälzkörper gegenüber den Käfigen nicht wesentlich ändert. Zur Übertragung von Umfangskräften in die entgegengesetzte Richtung ist jeder Zapfen 16 mit zwei zugeordneten Druckstücken 19, den Wälzkörpern 23 und den Flächen 20, 21 symmetrisch zu einer die Längsachse 13-13 aufnehmenden Zapfenmittenebene ausgebildet.

Die Lauffläche 21 eines Druckstückes 19 hat vorzugsweise eine rechteckige Form, so daß möglichst viele Wälzkörper 23 bei Verringerung der Flächenpressung einen tragenden Kontakt ausbilden. Es sind jedoch auch kreisförmige oder ovale Druckstücke 19 möglich.

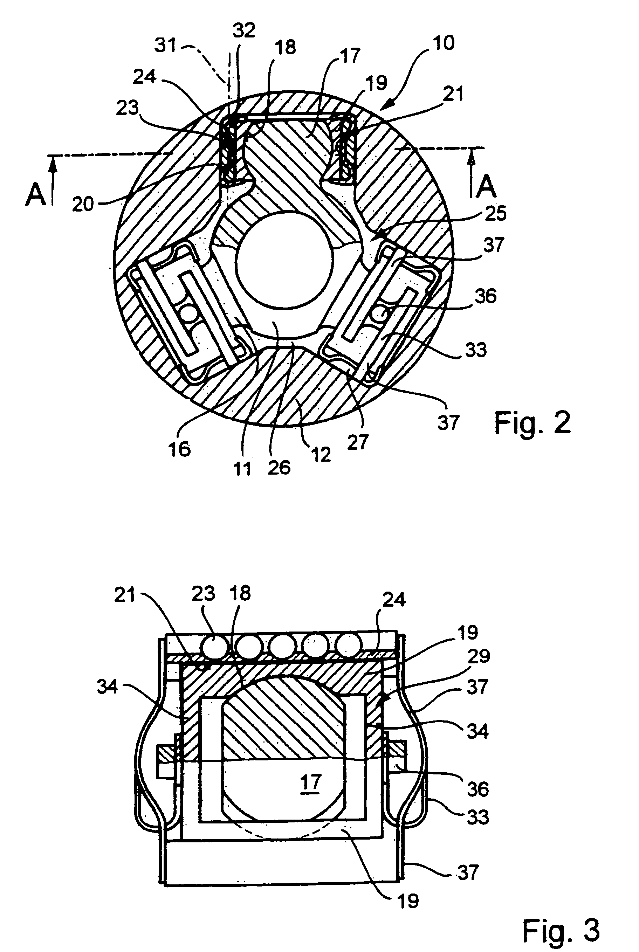

Das Gelenkaußenteil 12 verfügt über eine in Richtung der Längsachse 14-14 orientierte Ausnehmung 25 mit im wesentlichen kreisförmiger, mittiger Bohrung 26 sowie drei radial orientierten und jeweils unter 120° in Umfangsrichtung verteilten Aufnahmeräumen 27, die jeweils zur Aufnahme und Abstützung eines Zapfens 16, zweier Druckstücke 19 und von Wälzkörpern 23 dienen. Die Aufnahmeräume 27 verfügen in dem in Fig. 2 dargestellten Schnitt über eine im wesentlichen U-förmige, in Richtung der Bohrung 26 offene Kontur, wobei die Seitenschenkel der U-förmigen Kontur mit den Gegenflächen 20 gebildet sind. Im Ausführungsbeispiel gemäß Fig. 2 sind die Seitenschenkel geradlinig ausgebildet ohne Übergangsbereich zu den Gegenflächen 20. In Richtung der Bohrung 26 verfügen die Seitenschenkel insbesondere über keine Vorsprünge oder Vertiefungen, sondern gehen im innenliegenden Endbereich mit einer Abstandvergrößerung in die Bohrung 26 über. Die Wälzkörper mit Käfig sind in der in Fig. 2 dargestellten Stellung des Tripodegelenkes radial beabstandet von dem Grundschenkel der U-förmigen Kontur angeordnet.

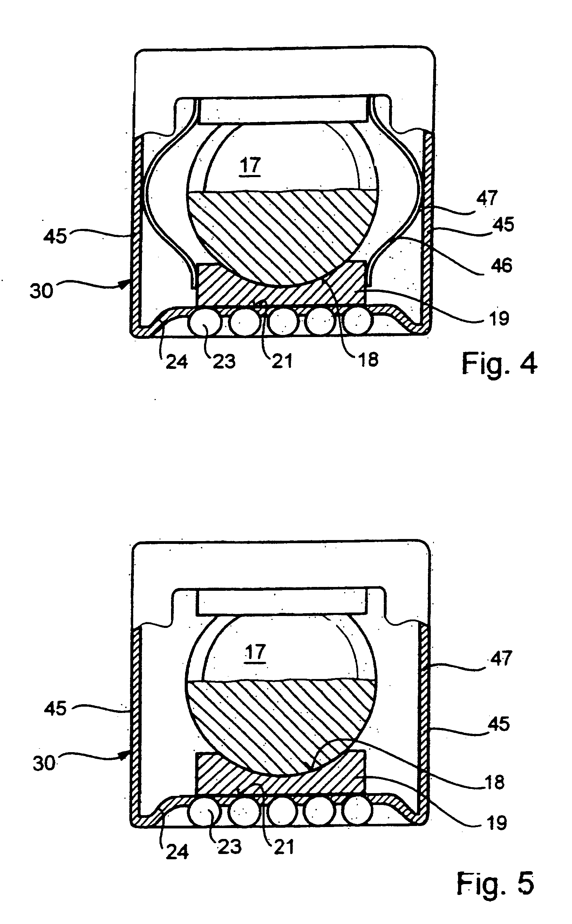

Je Zapfen 16 können zwei Druckstücke 19 und zwei Käfige 24 eingesetzt werden. Alternativ können die beiden Druckstücke 19 über Verbindungsbereiche zu einem Druckkörper 29 miteinander verbunden sein (Fig. 3) und/oder die beiden Käfige 24 als einstückiger Käfig 30 ausgebildet sein (Fig. 4, Fig. 5). Die einstückigen Käfige können quadratisch, rechteckig, ring- oder topfförmig ausgebildet sein, beispielsweise radial außen ganz oder teilweise geschlossen.

Gemäß Fig. 2 sind die Wälzkörper 23 in einem Käfig 24 geführt. In den Käfigen 24 sind die Wälzkörper 23 unter Gewährleistung der relativen Lage der Längsachsen 31 der Wälzkörper 23 zueinander geführt. Die Käfige 24 sind gegenüber dem Druckstück 19 in radialer Richtung über das Druckstück 19 umgreifende bzw. einschließende Schultern 32 geführt. Die Käfige 24 können über die Schultern 32 wie dargestellt auf das Druckstück 19 "geclipst" werden. Die Käfige 24 können weiterhin über Zentrier- oder Federelemente 33 in Laufrichtung der Wälzkörper 23 zentriert sein. Zwei Käfige 24 eines Zapfens 16 können über ein gemeinsames Federelement 33 geführt bzw. zentriert sein.

Entsprechend dem in Fig. 3 dargestellten Ausführungsbeispiel können die einem Kugelkörper 17 zugeordneten Druckstücke 19 über zwei Verbindungsstege 34 zu einem einstückig ausgebildeten Druckkörper 29 verbunden sein. Eine Einführung des Kugelkörpers 17 in den einstückigen Druckkörper 29 kann durch eine an sich bekannte Ausführung als Bajonett-Verbindung gewährleistet sein.

Gemäß dem Ausführungsbeispiel nach Fig. 2, Fig. 3 sind zwei Federelemente 33 über jeweils ein Befestigungsmittel 36 mit dem Druckstück 19, dem Druckkörper 29 oder dem Kugelkörper 17 verbunden. Die Federelemente 33 verfügen jeweils über zwei elastische Finger 37, welche zur Abstützung der gegenüberliegender Käfige 30 an diesen anliegen oder mit diesen verbunden sind.

Entsprechend den in den Figuren 2 und 3 dargestellten Anbindungsformen der Wälzkörper 23 an den Kugelkörper 17 führt der Käfig 24 bei jeder Umdrehung des Tripodegelenkes 10 eine bogenförmige Schwenkbewegung aus. Die Rollbahn des Käfigs 24 stellt sich auf der Gegenfläche 20 aufgrund der wirkenden inneren und äußeren Führungskräfte der Wälzkörper 23 selbständig ein. Die kinematischen Grenzen der Schwenkbewegung werden durch die Geometrie des Käfigs 24 und vor allem des Gelenkaußenteiles 12 gebildet. Im Betrieb des Tripodegelenkes kann es in Grenzsituationen zu einem Steuerkontakt des Druckstückes 19 mit den Endanschlägen des Käfigs 24 oder auch zu einem radialen Kontakt von Käfig 24 und Getriebeaußenteil 12 kommen. Diese Kontakte wirken sich auf den Betriebskomfort des Tripodegelenkes 10 nicht negativ aus, da die Kräfte nur in Grenzsituationen stochastisch auftreten und deshalb kein periodische Anregung darstellen.

Gemäß dem in Fig. 4 dargestellten Ausführungsbeispiel sind die auf den gegenüberliegenden Seiten des Kugelkörpers 17 angeordneten Käfige 24 über Verbindungsbereiche 45 zu einem einstückigen Käfig 30 miteinander verbunden. In diesem Fall ist eine Übereinstimmung der Position der Käfige 24 in Laufrichtung gewährleistet. Eine Zentrierung des Käfigs 30 gegenüber dem Druckstück 19, Druckkörper 29 oder dem Kugelkörper 17 kann über ein oder zwei vereinfacht ausgebildete Federelemente 33 erfolgen. In dem in Figur 4 dargestellten Ausführungsbeispiel sind in Laufrichtung auf beiden Seiten der Druckstücke 19 zwei Druckfedern 46 angeordnet. Die Druckfedern 46 sind als Blattfedern mit mittiger Ausbauchung 47 ausgebildet, deren Endbereiche an den Druckstücken 19 abgestützt sind und die im Bereich der Ausbauchung 47 an einem Verbindungsbereich 45 anliegen.

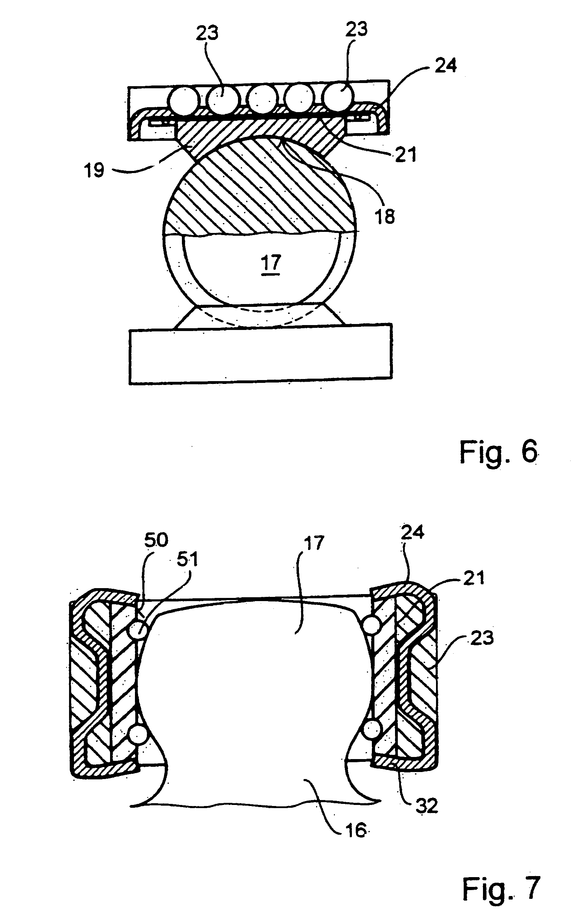

In dem in Figur 5 dargestellten Ausführungsbeispiel ist der Käfig 30 entsprechend Fig. 4 ausgebildet. In dem in Figur 6 dargestellten Ausführungsbeispiel sind der Käfig 24 sowie das Druckstück 19 für jede Seite als separate Bauteile ausgebildet und nicht miteinander verbunden.

Im Fall von zylinderförmigen Wälzkörper 23 können diese eine in Längsrichtung der Mantelfläche leicht gekrümmte Kontur aufweisen, wodurch der Gleitanteil bei einer Bewegungskomponente in Richtung der Längsachse 31 der Wälzkörper 23 oder bei Drehbewegungen der Wälzkörper quer zur Längsachse 31 weiter verringert werden kann.

Der Käfig 24, 30 mit den Wälzkörpern hat gegenüber dem Kugelkörper 17 insbesondere ausschließlich zwei Freiheitsgrade: Infolge einer geeignet ausgewählten Verbindung des Kugelkörpers 17 mit dem Druckstück 19 ist eine Verschwenkbarkeit um eine Achse senkrecht zur durch die Längsachse 13-13 des Gelenkinnenteiles 11 und die Längsachse der Zapfen 16 aufgespannten Ebene gewährleistet. Der zweite Freiheitsgrad besteht in der translatorisch verschieblichen Verbindung zwischen Käfig 24, 30 und Druckstück 19, 29. Zur Gewährleistung der Verschenkbarkeit des Druckstückes 19, 29 gegenüber dem Kugelkörper 17 kann das Druckstück 19, 29 den Kugelkörper 17 in einer Kugelkalotte aufnehmen. Die Kugelkalotte kann auf herkömmliche Weise mit flächigen Anlageflächen gebildet sein oder aber (teilweise) mit mehreren Linienkontakten, welche beispielsweise durch eine Bohrung 50 entstehen, in welcher der Kugelkörper 17 geführt ist, und weiteren in die Bohrung 50 eingesetzten Führungsringen 51, vgl. Fig. 7.

Die Wälzkörper 23 können im Falle ihrer Ausbildung als Zylinderrollen in den Käfigen 24, 30 mit parallelen oder unter einem spitzen Winkel geneigten Längsachsen 31 angeordnet sein.

Mit einer radialen Ausrichtung ist eine Ausrichtung quer zu einer der Längsachsen 13-13, 14-14 bezeichnet.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile sind den in den Zeichnungen dargestellten Geometrien der Vorrichtungsteile zu entnehmen.

## Patentansprüche

1. Tripodegelenk zur Übertragung eines Antriebsmomentes zwischen zwei Antriebselementen eines Antriebsstranges mit einem Gelenkinnenteil (11) und mit einem das Gelenkinnenteil aufnehmenden Gelenkaußenteil (12), wobei
a) das Gelenkinnenteil (11) über einen Tripodestern verfügt,
b) der Tripodestern über Kugelkörper (17) aufweisende Zapfen (16) verfügt,
c) die Kugelkörper (17) zumindest verschwenkbar um eine Achse quer zur durch die Längsachse (13-13) des Gelenkinnenteiles (11) und die Längsachse des Zapfens (16) aufgespannten Ebene gegenüber einem Druckstück (19, 29) gelagert sind,
d) zwischen parallelen Laufflächen (21) des Druckstückes (19, 29) und Gegenflächen (20) des Gelenkaußenteiles (12) im wesentlichen zylinderförmige Wälzkörper (23) angeordnet sind,
e) die Wälzkörper (23) in Käfigen (24, 30) mit gegenüber den Käfigen (24, 30) ortsfesten Längsachsen (31) angeordnet sind,
f) die Käfige (24, 30) jeweils längsverschieblich gegenüber dem Druckstück (19, 29) gelagert sind,
g) die Bewegung der Käfige gegenüber dem Druckstück (19) in radialer Richtung über das Druckstück (19) umgreifende bzw. einschließende Schultern (32) begrenzt ist,
h) die radiale Erstreckung der Gegenflächen (20) zumindest in Teilbereichen größer ist als die Längserstreckung der Wälzkörper (23) oder die radiale Erstreckung von dem die Wälzlager (23) führenden Käfig (24, 30), so dass gekrümmte Bahnen der Käfige (24, 30) mit den Wälzkörpern (23) ermöglicht sind,
i) wobei das Gelenkaußenteil (12) über Aufnahmeräume (27) für die Zapfen (16) verfügt, wobei die Aufnahmeräume (27) im Querschnitt über eine im wesentlichen U-förmige Kontur verfügen, die parallelen Seitenschenkel der Kontur radial nach innen geradlinig ausgebildet sind und die Seitenschenkel zumindest teilweise die Gegenflächen bilden, wobei die Seitenschenkel der U-förmigen Kontur ohne Stufe ausgebildet sind.

2. Tripodegelenk nach Anspruch 1
**dadurch gekennzeichnet, daß**
die Bewegung der Käfige gegenüber dem Druckstück (19) in radialer Richtung über das Druckstück (19) umgreifende bzw. einschließende Schultern (32) spielfrei geführt ist.

3. Tripodegelenk nach Anspruch 1 oder 2,
**dadurch gekennzeichnet, daß**
jedem Zapfen (16) auf gegenüberliegenden Seiten zwei Käfige (24) zugordnet sind, welche miteinander verbunden sind.

4. Tripodestern nach Anspruch 1 oder 3,
**dadurch gekennzeichnet, daß**
mindestens ein Käfig (24) in Wälzrichtung der Wälzkörper (23) über ein Verbindungselement (33) mit dem Druckstück (19) gekoppelt ist.

5. Tripodestern nach einem der vorhergehenden Ansprüche,
**dadurch gekennzeichnet, daß**
Käfige mit den Schultern aus einem Blech gefertigt sind.

## Claims

1. Tripod joint for the transmission of a drive torque between two drive elements of a drive train, with an inner joint component (11) and an outer joint component (12) that holds the inner joint component, such that:
a) the inner joint component (11) has a tripod star,
b) the tripod star has trunnions (16) with ball elements (17),
c) the ball elements (17) are mounted at least so that they can swivel about an axis transverse to the plane extending through the longitudinal axis (13-13) of the inner joint component (11) and the longitudinal axis of the trunnion (16) towards a pressure component (19, 29),
d) essentially cylindrical rollers (23) are arranged between parallel running surfaces (21) of the pressure component (19, 29) and the opposed surfaces (20) of the outer joint component (12),
e) the rollers (23) are arranged in cages (24, 30) with their longitudinal axes (31) positionally fixed relative to the cages (24, 30),
f) the cages (24, 30) are each fitted so that they can move longitudinally relative to the pressure component (19, 29),
g) the movement of the cages relative to the pressure component (19) is limited in the radial direction by shoulders (32) which surround or enclose the said pressure component (19),
h) the radial extension of the opposed surfaces (20), at least in some areas, is larger than the longitudinal extension of the rollers (23) or the radial extension of the cage (24, 30) guiding the roller bearing (23), so that curved paths of the cages (24, 30) with the rollers (23) are made possible,
i) such that the outer joint component (12) has accommodation spaces (27) for the trunnions (16), these accommodation spaces (27) having a substantially U-shaped contour in cross-section, the parallel side-arms of the said contour extending radially straight inwards and the said side-arms forming the said opposed surfaces at least in part, such that the side-arms of the U-shaped contour are formed without steps.

2. Tripod joint according to Claim 1,
**characterised in that**
the movement of the cages relative to the pressure component (19) is guided in the radial direction without play by the shoulders (32) that surround or enclose the pressure component (19).

3. Tripod joint according to Claims 1 or 2,
**characterised in that**
with each trunnion (16) are associated two cages (24) on opposite sides, which are connected to one another.

4. Tripod star according to Claims 1 or 3,
**characterised in that**
at least one cage (24) is coupled in the rolling direction of the roller (23) to the pressure component (19) by means of a connecting element (33).

5. Tripod star according to any of the preceding claims,
**characterised in that**
the cages with the shoulders are made from a sheet.

## Revendications

1. Joint à tripode pour transmettre un couple d'entraînement entre deux éléments d'entraînement d'un train d'entraînement, comportant une partie intérieure de joint (11) et une partie extérieure de joint (12) recevant la partie intérieure de joint, dans lequel
a) la partie intérieure de joint ( 11 ) dispose d'une étoile tripode,
b) l'étoile tripode dispose de tenons (16) comprenant des corps sphériques (17),
c) les corps sphériques (17) sont montés au moins avec faculté de pivotement par rapport à un élément de pression (19, 29) autour d'un axe transversalement au plan défini par l'axe longitudinal (13-13) de la partie intérieure de joint (11) et par l'axe longitudinal du tenon (16),
d) des corps de roulement (23) sensiblement cylindriques sont agencés entre des surfaces de roulement (21) de l'élément de pression (19, 29) et des contre-surfaces (20) de la partie extérieure de joint (12), parallèles entre elles,
e) les corps de roulement (23) sont agencés dans des cages (24, 30) au moyen d'axes longitudinaux (31) stationnaires par rapport aux cages (24, 30),
f) les cages (24, 30) sont montées chacune avec faculté de translation longitudinale par rapport à l'élément de pression (19, 29),
g) le mouvement en direction radiale des cages par rapport à l'élément de pression (19) est limité par des épaulements (32) entourant ou enfermant l'élément de pression (19),
h) au moins dans des zones partielles, l'extension radiale des contre-surfaces (20) est supérieure à l'extension longitudinale des corps de roulement (23) ou à l'extension radiale de la cage (24, 30) menant les corps de roulement (23), de sorte que des voies incurvées des cages (24, 30) avec les corps de roulement (23) sont possibles,
i) la partie extérieure de joint (12) dispose d'espaces de logement (27) pour les tenons (16), les espaces de logement (27) présentant en section transversale un contour sensiblement en forme de U, les branches latérales parallèles du contour sont réalisées en ligne droite radialement vers l'intérieur, et les branches latérales forment au moins partiellement les contre-surfaces, les branches latérales du contour en forme de U étant réalisées sans gradin.

2. Joint à tripode selon la revendication 1, **caractérisé en ce que** le mouvement en direction radiale des cages par rapport à l'élément de pression (19) est guidé sans jeu par des épaulements (32) entourant ou enfermant l'élément de pression (19).

3. Joint à tripode selon l'une ou l'autre des revendications 1 et 2, **caractérisé en ce que** deux cages (24) sont associées à chaque tenon (16) sur des côtés opposés, lesquelles sont reliées l'une à l'autre.

4. Joint à tripode selon l'une ou l'autre des revendications 1 et 3, **caractérisé en ce qu'**au moins une cage (24) est couplée à l'élément de pression (19) via un élément de liaison (33) en direction de roulement des corps de roulement (23).

5. Joint à tripode selon l'une des revendications précédentes, **caractérisé en ce que** des cages comportant les épaulements sont fabriquées en tôle.
